Europäisches Patentamt

European Patent Office

Office européen des brevets

(11) Veröffentlichungsnummer: **0 292 865 B1**

(12) # EUROPÄISCHE PATENTSCHRIFT

(45) Veröffentlichungstag der Patentschrift: **23.09.92**

(51) Int. Cl.⁵: **E01C  13/00**, B32B 15/08

(21) Anmeldenummer: **88108000.6**

(22) Anmeldetag: **19.05.88**

(54) **Mehrschichtige Polsterschicht unter Kunstrasen und ihre Verwendung.**

(30) Priorität: **27.05.87 DE 3717880**

(43) Veröffentlichungstag der Anmeldung:
**30.11.88 Patentblatt  88/48**

(45) Bekanntmachung des Hinweises auf die
Patenterteilung:
**23.09.92 Patentblatt  92/39**

(84) Benannte Vertragsstaaten:
**AT BE CH DE FR GB LI LU NL SE**

(56) Entgegenhaltungen:
**FR-A- 2 289 342**
**GB-A- 2 011 837**
**US-A- 3 411 967**

(73) Patentinhaber: **HÜLS TROISDORF AKTIENGE-
SELLSCHAFT**
**Kölner Str. 176**
**W-5210 Troisdorf(DE)**

Patentinhaber: **Balsam Sportstättenbau GmbH
& Co. KG.**
**Bisamweg 3**
**W-4803 Steinhagen(DE)**

(72) Erfinder: **Breitscheidel, Hans-Ulrich**
**Kapellenstrasse 43a**
**W-5200 Siegburg(DE)**
Erfinder: **Kautz, Rudolf**
**Drosselweg 5**
**W-5202 Hennef 1(DE)**
Erfinder: **Sandermann, Karl-Heinz**
**Ernst-Klassmeier-Weg 7**
**W-4920 Lemgo(DE)**

EP 0 292 865 B1

## Beschreibung

Die Erfindung betrifft eine mehrschichtige Polsterschicht unter Kunstrasen. Die Erfindung betrifft ebenfalls die Verwendung einer derartigen Polsterschicht unter Kuntrasen.

Kunstrasen wird in zunehmendem Umfang als strapazierfähiger Belag für der Witterung ausgesetzte Sportstätten eingesetzt. Zur Vermeidung von Verletzungen der Sportler ist es üblich, den Kunstrasen mit einer Polsterschicht zu unterlegen. Als Polsterschichten werden bislang beispielsweise Platten oder Bahnen aus Gummischnitzeln (Recycling-Material) oder Polyurethan-Schaumstoffe eingesetzt. Die Verwendung von kompakten Materialien wie verpreßten Gummischnitzeln ist wegen des hohen Flächengewichtes von Nachteil, während die Verwendung von Polyurethan-Schaumstoffen wegen der hohen Wasseraufnahmefähigkeit dieses Materials nachteilig ist.

Zur Überwindung dieser Nachteile ist bereits vorgeschlagen worden, als Polsterschicht unter Kunstrasen Bahnen oder Platten aus Polyethylen-Schaumstoff einzusetzen (US-A-4,489,115). Polyethylen-Schaumstoff dehnt sich bei Sonnenbestrahlung aufgrund seines hohen Wärmeausdehnungskoeffizienten von ca. 350 x $10^{-6}\,K^{-1}$ in erheblichem Maße aus. Bei der üblichen Verlegung von Polsterschichten unter Kunstrasen, bei dem eine Bahn des Polstermaterials mit einer Länge von bis zu 50 m ohne Fixierung auf den Untergrund aufgelegt und anschließend mit dem Kunstrasen ohne zusätzliche Fixierung belegt wird, würde eine Polyethylen-Schaumstoff-Polsterschicht bei einer Erwärmung durch Sonneneinstrahlung um 35° C eine Maßänderung von ca. 0,6 m aufweisen. Hierdurch wird eine Wellenbildung bewirkt, die aufgrund des geringen Flächengewichtes von Polyethylenschaum bei Windeinfall ein Verlegen des Kunstrasens erheblich behindert. Ein Nachspannen der durch Wärmeeinwirkung gedehnten Bahn hätte zur Folge, daß beim Abkühlen Schrumpfspannungen eintreten, die Verlagerungen bzw. Stauchfalten im Kunstrasen bewirken können.

Der Erfindung lag daher die Aufgabe zugrunde, eine Polsterschicht unter Kunstrasen zur Verfügung zu stellen, die bei geringem Flächengewicht ein geringes Wasseraufnahmevermögen aufweist und die mit geringem Aufwand zu verlegen ist.

Die Erfindung löst die Aufgabe durch eine mehrschichtige Polsterschicht unter Kunstrasen mit den kennzeichnenden Merkmalen des Anspruchs 1, bevorzugt in Verbindung mit einem oder mehreren Merkmalen der Unteransprüche.

Wesentliches Merkmal der Erfindung ist es, die Längenausdehnung der Polsterschicht dadurch zu verringern, daß der geschäumte Kunststoff mit einer wärmereflektierenden Metallfolie bzw. Metallschicht versehen wird. Als besonders geeigneter geschäumter Kunststoff hat sich geschlossenzelliger und insbesondere vernetzter Polyethylen-Schaumstoff einer Rohdichte von 30 bis 150 kg/m³, insbesondere 50 bis 100 kg/m³ herausgestellt. Unter Polyethylen-Schaumstoff im Sinne dieser Erfindung werden physikalisch oder chemisch vernetzte Schaumstoffe auf der Basis von Polyethylen, Copolymeren von Ethylen mit anderen Monomeren, Mischungen aus Polyethylen und/oder Ethylen-Copolymeren verstanden. Bevorzugt wird ein Polyethylen-Schaumstoff einer Dicke von 5 bis 20 mm, insbesondere 8 bis 12 mm eingesetzt.

Polyethylen-Schaumstoff ist nur mit hohem technischem Aufwand mit Metallfolien, z.B. Aluminiumfolien, zu kaschieren. Gemäß einer vorteilhaften Ausgestaltung der Erfindung wird daher vorgeschlagen, den geschäumten Kunststoff mit einem metallfolienbeschichteten Papier, insbesondere einem aluminiumbeschichteten Kraftpapier, zu kaschieren. Cellulosematerial wie Kraftpapier läßt sich durch dem Fachmann bekannte Flammkaschierung ohne Verwendung von Klebstoffen oder Haftvermittlern mit Polyethylen-Schaumstoff mit hoher Haftfestigkeit kaschieren. In einer weiteren bevorzugten Ausführungsform der Erfindung wird vorgeschlagen, den geschäumten Kunststoff mit einer Polyolefin-beschichteten Metallfolie aus unvernetztem Polyolefin, insbesondere Polyethylen, zu beschichten. Der Verbund aus vernetztem Polyethylen-Schaumstoff und dem unvernetzten Polyethylen läßt sich auf einfache Weise durch Flammkaschierung durchführen.

Bei der Flammkaschierung wird insbesondere mit offener Flamme die Polyethylen-Schaumstoffbahn an der Oberfläche auf eine Temperatur von etwa 180 bis 300° C erwärmt, so daß diese klebrig wird und mit der Bahn aus Cellulosematerial bzw. unvernetzem Polyethylen im Walzenspalt verpreßt.

Es hat sich überraschend herausgestellt, daß die erfindungsgemäße Polterschicht aus geschäumtem Kunststoff und einer Metallfolie nicht nur geringere Temperaturerhöhung bei Sonneneinstrahlung durch die Reflektion der Infrarotstrahlung aufweist, sondern bei vorgegebener Temperaturerhöhung auch eine erheblich geringere Längenausdehnung aufweist. Die Metallfolie ist nämlich in der Lage, erhebliche Zugkräfte aufzunehmen und somit eine Wärmedehnung der Verbundbahn zu vermindern. Bei Verwendung einer zusätzlichen Kraftpapierschicht als mittlere Schicht wird die thermische Längenausdehnung weiter verringert.

Als besonders geeignet hat sich die Verwendung von Kraftpapier mit einem Flächengewicht von 30 bis

2

60 g/m$^2$ herausgestellt, das mit einer 5 bis 15 $\mu$m dicken Aluminiumfolie leimkaschiert wurde.

Der bevorzugt eingesetzte geschlossenzellige Polyethylen-Schaumstoff ist weitgehend wasserundurchlässig. Bei Verwendung der erfindungsgemäßen mehrschichtigen Polsterschicht im Freien ist daher vorgesehen, die Schicht, z.B. mittels einer Stachelwalze zu perforieren, um ein Abfließen des Wassers (Regen) zu ermöglichen. Die Perforierung kann z.B. durch Löcher mit einem Durchmesser von 3 bis 15 mm erfolgen, wobei die Löcher einen Abstand von 20 bis 200 mm voneinander aufweisen. Trotz dieser Perforierung nimmt der eingesetzte Polyethylen-Schaumstoff nahezu kein Wasser auf.

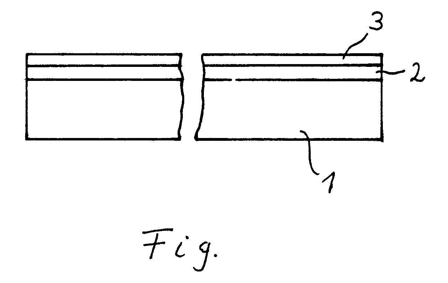

Die Erfindung wird im folgenden anhand eines Ausführungsbeispiels und eines Vergleichsbeispiels sowie der Zeichnung erläutert.

## 1. Vergleichsbeispiel

Eine Platte (Handelsbezeichnung: TROCELLEN$^R$ 5010 P der Anmelderin) aus vernetztem, geschlossenzelligem Polyethylen-schaumstoff einer Rohdichte von 50 kg/m$^3$, einer Dicke von 10 mm und einer Länge von 450 mm wurde 30 min einer mittelwelligen Infrarot-Strahlung ausgesetzt. Die Enden der Schaumstoffplatte wurden fixiert, um eine Längenausdehnung zu verhindern. Die Umgebungstemperatur betrug 20°C. Die Platte lag bei Prüfbeginn flach auf einer Spanplattenunterlage. Gemessen wurden nach 30 min: Temperatur in ca. 1 mm unter der Schaumstoffoberfläche, Temperatur auf der Unterseite des Schaums und maximale Wölbhöhe zwischen Auflage und Unterkante Prüfmuster.

## 2. Ausführungsbeispiel

Entsprechend den Versuchsbedingungen nach Beispiel 1 wurde ein erfindungsgemäßes Verbundmaterial aus einem Polyethylen-Schaumstoff (gleichen Typs wie bei Beispiel 1) mit einer Kaschierung aus einem Kraftpapier (40 g/m$^2$) und einer 7 $\mu$m starken Aluminiumfolie den gleichen Bedingungen ausgesetzt.

## 3. Ausführungsbeispiel

Entsprechend den Versuchsbedingungen nach Beispiel 1 wurde ein erfindungsgemäßes Verbundmaterial aus einem Polyethylen-Schaumstoff (gleichen Typs wie bei Beispiel 1) mit einer Kaschierung aus einer 15 $\mu$m starken Polyethylen-Folie (LDPE) und einer 18 $\mu$m starken Aluminiumfolie den gleichen Bedingungen ausgesetzt.

In der nachfolgenden Tabelle werden die Versuchsergebnisse gegenübergestellt.

## Ergebnis:

| Beispiel | Temp. ca. 1 mm unter Oberfläche | Temp. auf Unterseite | Wölbhöhe |
|----------|--------------------------------|---------------------|----------|
| 1. TROCELLEN$^R$ 5010 P anthrazit unbehandelt | 70° C | 36° C | 25 mm |
| 2. Wie 1. mit Alu/Papier 7 $\mu$m/40g/m$^2$ kaschiert | 42° C | 27° C | 0 |
| 3. Wie 1. mit Alu/LDPE 18 $\mu$m/15 $\mu$m kaschiert | 44° C | 28° C | 0 |

Die Ergebnisse zeigen, daß durch den Einsatz einer mit dem geschäumtem Kunststoff vollflächig haftfest verbundenen Schicht aus Papier und Metallfolie bzw. Polyethylen und Metallfolie die Wärmeausdehnung praktisch völlig unterbunden wird.

Eine Überprüfung der erfindungsgemäßen mehrschichtigen Polsterschicht im Vergleich mit einer nicht

3

kaschierten Polyethylen-Schaumstoffbahn, jeweils mit einer Länge von 50 m, ergab eine Maßänderung der unkaschierten Bahn bei starker Sonneneinstrahlung von 0,6 m und der erfindungsgemäßen Bahn von 30 mm. Die Längenänderung der erfindungsgemäßen mehrschichtigen Polsterschicht betrug somit nur ca. 5 % der Längenausdehnung einer nicht kaschierten Polyethylen-Schaumstoffbahn.

Die Figur zeigt die erfindungsgemäße Polsterschicht, bestehend aus der Polyethylen-Schaumstoffbahn 1, einer Schicht Kraftpapier 2 und einer Aluminiumfolie 3.

Die erfindungsgemäße Polsterschicht weist ein geringes Flächengewicht, ein geringes Wasseraufnahmevermögen und eine geringe thermische Längenausdehnung auf.

**Patentansprüche**

1. Mehrschichtige Polsterschicht unter Kunstrasen, *gekennzeichnet durch* eine untere Schicht (1) aus geschäumtem Kunststoff und einer mit der unteren Schicht, ggf. unter Zuhilfenahme einer zusätzlichen mittleren Schicht (2), vollflächig haftfest verbundenen Schicht (3) aus einer Metallfolie.

2. Mehrschichtige Polsterschicht unter Kunstrasen nach Anspruch 1, *dadurch gekennzeichnet,* daß als geschäumter Kunststoff ein geschlossenzelliger Polyethylen-Schaumstoff einer Rohdichte von 30 bis 150 kg/m$^3$, insbesondere 50 bis 100 kg/m$^3$ verwendet wird.

3. Mehrschichtige Polsterschicht unter Kunstrasen nach einem der Ansprüche 1 oder 2, *dadurch gekennzeichnet,* daß der geschäumte Kunststoff eine Dicke von 5 bis 20 mm, insbesondere 8 bis 12 mm aufweist.

4. Mehrschichtige Polsterschicht unter Kunstrasen nach einem der Ansprüche 1 bis 3, *dadurch gekennzeichnet,* daß die untere Schicht (1) mit einem Verbund aus einer 5 bis 15 µm dicken Aluminiumfolie und einem Kraftpapier mit einem Flächengewicht von 30 bis 60 g/m$^2$ kaschiert ist.

5. Mehrschichtige Polsterschicht unter Kunstrasen nach einem der Ansprüche 1 bis 3, *dadurch gekennzeichnet,* daß die untere Schicht (1) mit einem Verbund aus einer 5 bis 30 µm dicken Aluminiumfolie und einer unvernetzten Polyethylenfolie einer Stärke von 10 bis 30 µm kaschiert ist.

6. Mehrschichtige Polsterschicht unter Kunstrasen nach einem der Ansprüche 1 bis 5, *dadurch gekennzeichnet,* daß diese perforiert ist.

7. Verwendung einer mehrschichtigen Polsterschicht mit einer unteren Schicht (1) aus geschäumtem Kunststoff und einer mit der unteren Schicht, ggf. unter Zuhilfenahme einer zusätzlichen mittleren Schicht (2), vollflächig haftfest verbundenen Schicht (3) aus einer Metallfolie als Polsterschicht unter Kunstrasen.

**Claims**

1. Multilayered cushioning layer under artificial lawns, characterised by a lower layer (1) made of foamed plastic and a layer (3) of a metal foil which is firmly bonded, appropriately with the aid of an additional middle layer (2), over its entire surface to the lower layer.

2. Multilayered cushioning layer under artificial lawns according to Claim 1, characterised in that the foamed plastic used is a closed-cell polyethylene foam having an apparent density of 30 to 150 kg/m$^3$, especially 50 to 100 kg/m$^3$.

3. Multilayered cushioning layer under artificial lawns according to one of Claims 1 or 2, characterised in that the foamed plastic has a thickness of 5 to 20 mm, preferably 8 to 12 mm.

4. Multilayered cushioning layer under artificial lawns according to one of Claims 1 to 3, characterised in that the lower layer (1) is covered with a laminate of a 5 to 15 µm thick aluminium foil and a kraft paper having a weight per unit area of 30 to 60 g/m$^2$.

5. Multilayered cushioning layer under artificial lawns according to one of Claims 1 to 3, characterised in that the lower layer (1) is covered with a laminate of a 5 to 30 µm thick aluminium foil and a non-crosslinked polyethylene film of 10 to 30 $\mu$m thickness.

6. Multilayered cushioning layer under artificial lawns according to one of Claims 1 to 5, characterised in that it is perforated.

7. Use of a multilayered cushioning layer with a lower layer (1) made of foamed plastic and a layer (3) of a metal foil which is firmly bonded, appropriately with the aid of an additional middle layer (2), over its entire surface to the lower layer as a cushioning layer under artifical lawns.

**Revendications**

1. Couche de rembourrage multiple sous gazon artificiel, caractérisée par une couche inférieure (1) constituée de matière plastique mousse et par une couche (3) constituée d'une feuille métallique encollée sur toute sa surface à la couche inférieure, éventuellement par l'entremise d'une couche centrale supplémentaire (2).

2. Couche de rembourrage multiple sous gazon artificiel selon la revendication 1, caractérisée en ce qu'on utilise comme matière plastique mousse une mousse de polyéthylène à pores fermés d'une masse volumique apparente de 30 à 150 kg/m³, en particulier de 50 à 100 kg/m³.

3. Couche de rembourrage multiple sous gazon artificiel selon l'une des revendications 1 et 2, caractérisée en ce que la matière plastique mousse présente une épaisseur de 5 à 20 mm, en particulier de 8 à 12 mm.

4. Couche de rembourrage multiple sous gazon artificiel selon l'une quelconque des revendications 1 à 3, caractérisée en ce que la couche inférieure (1) est contrecollée sur un complexe formé d'une feuille d'aluminium de 5 à 15 microns d'épaisseur et d'un papier kraft d'un grammage de 30 à 60 g/m².

5. Couche de rembourrage multiple sous gazon artificiel selon l'une quelconque des revendications 1 à 3, caractérisée en ce que la couche inférieure (1) est contrecollée sur un complexe formé d'une feuille d'aluminium de 5 à 30 microns d'épaisseur et d'une feuille de polyéthylène non réticulé d'une épaisseur de 10 à 30 microns.

6. Couche de rembourrage multiple sous gazon artificiel selon l'une quelconque des revendications 1 à 5, caractérisée en ce qu'elle est perforée.

7. Utilisation d'une couche de rembourrage multiple formée d'une couche inférieure (1) constituée de matière plastique mousse et d'une couche (3) constituée d'une feuille métallique encollée sur toute sa surface à la couche inférieure, éventuellement par l'entremise d'une couche centrale supplémentaire (2), à titre de couche de rembourrage sous gazon artificiel.

Fig.